(19) Europäisches Patentamt
European Patent Office
Office européen des brevets

(11) EP 4 488 310 A1

(12) **EUROPÄISCHE PATENTANMELDUNG**

(43) Veröffentlichungstag:
**08.01.2025 Patentblatt 2025/02**

(21) Anmeldenummer: **24000089.3**

(22) Anmeldetag: **03.07.2024**

(51) Internationale Patentklassifikation (IPC):
***C08G 18/38*** *(2006.01)* ***C08G 18/73*** *(2006.01)*
***C08G 18/75*** *(2006.01)* ***C08G 18/79*** *(2006.01)*
***C08G 18/80*** *(2006.01)* ***C09D 175/02*** *(2006.01)*

(52) Gemeinsame Patentklassifikation (CPC):
**C08G 18/3821; C08G 18/73; C08G 18/755; C08G 18/798; C08G 18/8058; C09D 175/02**

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**GE KH MA MD TN**

(30) Priorität: **07.07.2023 DE 102023118068**
**07.12.2023 DE 102023134366**

(71) Anmelder: **Rodan coatings GmbH**
**40764 Langenfeld (DE)**

(72) Erfinder:
- **Rohrbeck, Daniel**
  **40764 Langenfeld (Rhld.) (DE)**
- **Rohrbeck, Siegfried**
  **40764 Langenfeld (Rhld.) (DE)**

(54) **BEI GERINGER TEMPERATUR HÄRTENDE KLARLACK-ZUSAMMENSETZUNG MIT HOHEM FESTKÖRPERANTEIL**

(57) Die Erfindung betrifft unter anderem einen Klarlack, insbesondere für ein Beschichtungssystem (10) einer Fahrzeugreparatur-Lackierung, das mehrere Schichten (11, 12, 13, 14, 15) umfasst, insbesondere wenigstens eine Basislackschicht (15) und eine Klarlackschicht (16), wobei der Klarlack wenigstens zwei Komponenten umfasst, wobei die erste Komponente von einem Bindemittel und die zweite Komponente von einem Härter bereitgestellt ist, wobei das Bindemittel ein Reaktionsprodukt, insbesondere in Form eines negativen Prepolymers, umfasst, das aus einer Reaktionsmischung von wenigstens zwei Reaktionskomponenten a) und b) erhalten wird,
wobei die Reaktionskomponente a) Asparaginsäureester, insbesondere Polyasparaginsäureester, oder einen anderen Ester einer polyfunktionellen Aminocarbonsäure umfasst,
und wobei die Reaktionskomponente b) Isophorondiisocyanat, oder wenigstens ein anderes Polyisocyanat, vorzugsweise ein Hexamethylendiisocyanat und/oder Pentamethylendiisocyanat (PDI), umfasst.

Fig. 13

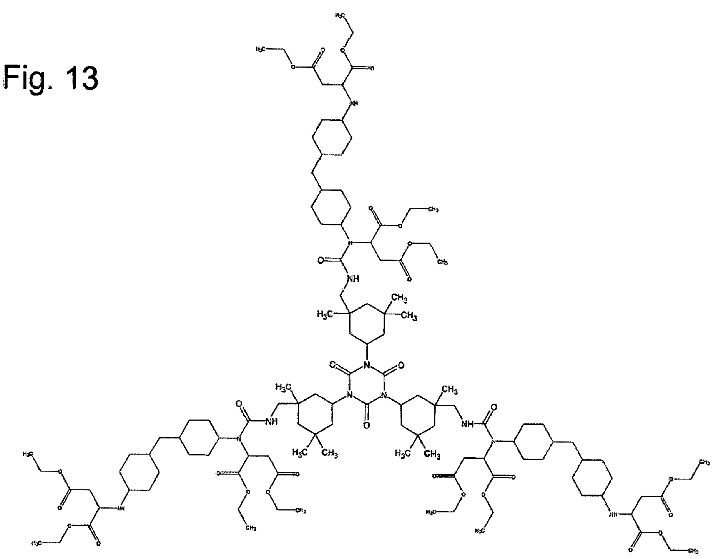

EP 4 488 310 A1

## Beschreibung

Die Erfindung bezieht sich zunächst auf einen Klarlack nach Anspruch 1.

Die Anmelderin befasst sich seit langer Zeit mit der Entwicklung von Klarlacken, insbesondere für Autoreparatur-Lackierungen.

Bei der Fahrzeugreparaturlackierung werden in der Regel Lacksysteme eingesetzt, die eine Klarlackschicht aufweisen, die von einem Acryl-Harz gebildet ist. Diese Klarlacke werden in der Regel bei 40°C bis 60°C für mindestens 10 Minuten forciert getrocknet ("Einbrennen"). Der Trocknungsvorgang erfolgt in Lackierfachbetrieben.

Bei Beschädigung der Lackschicht, z. B. nach Unfällen oder zur Ausbesserung kleiner Beschädigungen, wird es als nachteilig angesehen, große Volumina einer Kabine auf hohe Temperaturen zu heizen, da hiermit ein erheblicher Energieaufwand verbunden ist.

Es bestehen Klarlacke für Mehrschichtlacksysteme, die bei Raumtemperatur, also ohne das Betreiben einer Heizung, härten können. Allerdings sind hier sehr lange Trocknungszeiten erforderlich, sodass die bei Raumtemperatur lackierten Gegenstände, also z. B. ein Fahrzeugteil oder das gesamte Fahrzeug, z.B. über Nacht trocknen müssen, was die nachfolgende Bearbeitung erschwert und verkompliziert. Darüber hinaus besteht bei Klarlacken des Standes der Technik häufig das Problem, dass blasenförmige Oberflächenstörungen (sogenannte "Kocher") durch forcierte Trocknung, insbesondere über 40 °C, auftreten können und das erforderliche homogene Erscheinungsbild des getrockneten Klarlackfilms erheblich stören.

Es besteht daher ein Bedarf für einen Klarlack, der schnell und bei Raumtemperatur austrocknet, und bei dem ein eventuelles Auftreten von sog. Kochern reduziert oder verhindert wird.
Außerdem soll ein solcher Klarlack die gesetzlichen Anforderungen (Decopaint-Richtlinie der Europäischen Union) an Raumluftschadstoffe (VOC - Volatile Organic Compounds) erfüllen.

Die Erfindung löst diese Aufgabe durch Bereitstellung eines Klarlacks mit den Merkmalen des Anspruches 1.

Gemäß der Erfindung wird ein Klarlack bereitgestellt, der zumindest zwei Komponenten umfasst: Eine erste Komponente wird von einem Bindemittel, insbesondere aus einem negativen Prepolymer, gebildet und die zweite Komponente wird von einem Härter gebildet.

Das Bindemittel als Reaktionsprodukt im Sinne der vorliegenden Erfindung umfasst zwei wesentliche Bestandteile als Reaktionskomponenten, nämlich

Bestandteil a) Asparaginsäureester, oder einen anderen Ester einer polyfunktionellen Aminocarbonsäure

Bestandteil b) Isophorondiisocyanat, oder wenigstens ein anderes Polyisocyanat.

Diese beiden Bestandteile sind vorzugsweise in einem Mischungsverhältnis 85:15 gemischt, wobei gewisse Abweichungen von der Erfindung umfasst sind.

Beispielsweise werden 60 Gew.-% der Gesamtmischung in 40 Gew.-% organischem - aliphatischen und/ oder aromatischen - Lösemittel gelöst. Von der Erfindung sind aber freilich auch andere Mischungsverhältnisse umfasst.

Der Ester der polyfunktionellen Aminocarbonsäure des Bestandteils a) bzw. der Aspariginsäureester ist vorzugsweise ein dimerer Polyasparaginsäureester, insbesondere ein Tetraethyl- N, N'-(methylenedicyclohexan-4,1-diyl) bis-DL-aspartat.
Der Bestandteil b) der ersten Komponente umfasst mindestens ein Polyisocyanat vorzugsweise ein Isophorondiisocyanat, oder ein Polyisocyanat-Gemisch.

Der Bestandteil b) umfasst vorzugsweise ein alicyklisches Polyisocyanat, beispielsweise C6-C13-Cycloalkylendiisocyanat, insbesondere ein Polyisophorondiisocyanat, und/oder ein aliphatisches Polyisocyanat, vorzugsweise ein C3-C8-Alkylendiisocyanat, weiter bevorzugt ein C4-C6-Alkylendiisocyanat, insbesondere ein Hexamethylendiisocyanat (HDI) und/oder Pentamethylendiisocyanat (PDI), wobei dieser Stoff im Rahmen der Erfindung vorzugsweise in Form von Oligomeren oder in Form von Gemischen von Oligomeren bereitgestellt wird, die durch an sich bekannte Oligomerisierungsreaktionen von einfachen Diisocyanaten erhalten werden. Solche Oligomerisierungsreaktionen sind z.B. die Dimerisierung, Trimersisierung, Biuretisierung, Harnstoffbildung, Urethanisierung, Allophanatisierung und/oder Cyclisierung unter Ausbildung von Isocyanurat-, Iminooxadiazin und/oder Oxadiazinstrukturen, wovon mehrerer dieser Oligomerisierungsreaktionen gleichzeitig oder nacheinander ablaufen können.

Ganz allgemein wird der Bestandteil b) als (Cyclo-) aliphatisches Isocyanat oder als Isocyanatgemisch bezeichnet.

Die erste Komponente ist ein neu entwickeltes Bindungsmittel, das aus zwei an sich bekannten Bestandteilen a) und b) bereitgestellt ist. Dieses wird als ein negatives Prepolymer bezeichnet. Der Begriff "negatives Prepolymer" wurde gewählt, weil im Stand der Technik Prepolymere in der Lacke- und Farbenindustrie gewöhnlich einen Isocyanat (NCO)-Gruppen-Überschuss aufweisen. Im Falle des hier genannten "negativen Prepolymers" liegt ein Amin (NH)-Gruppen-Überschuss, vorzugsweise als sekundäre Aminogruppe, vor.

Die beiden Bestandteile der ersten Komponente bilden zusammen eine Reaktionsmischung und liegen in dem Bindemittel als Reaktionsprodukt vor.

Das Bindemittel wird als erste Komponente vorgefertigt, konfektioniert und luftdicht verschlossen aufbewahrt. Es wird erst am Einsatzort mit der zweiten Komponente, dem Härter, zusammengebracht. Der Härter ist vorzugsweise von einem HDI (Hexamethylendiisocyanat) und/oder PDI (Pentamethylendiisocyanat), bzw. und/ oder einem Isophorondiisocyanat bereitgestellt.

Das System stellt einen sogenannten zwei-Komponenten (2K) Klarlack dar (beschrieben in BASF Handbuch Lackiertechnik-Goldschmidt, Streitberger - 2014 - Seite 93).

Der erfindungsgemäß vorgeschlagene Klarlack ermöglicht ein Auftragen des Klarlackes, ohne dass ein Einbrennvorgang erforderlich ist. Zugleich bietet dieses System den Vorteil eines herkömmlichen 2K-Acryl-Standard-Klarlackes des Standes der Technik. Mit dem erfindungsgemäßen Klarlack werden die geltenden Grenzwerte der europäischen Union von VOC 420 g/L (decopaint-Richtlinie) erfüllt und unterschritten.

Der erfindungsgemäße Klarlack umfasst in der ersten Komponente z.B. einen Bestandteil a), der als Asparaginsäureester bezeichnet wird. Dieser Bestandteil ist beispielsweise von der Firma Covestro AG unter der Markenbezeichnung "DESMOPHEN NH" kommerziell erhältlich.

Von Covestro AG sind mehrere derartige geeignete Rohstoffe beziehbar, z.B. Produkte unter den Artikelbezeichnungen "DESMOPHEN" NH1520, NH 1420/1422 und NH1220.

Von der Erfindung ist insbesondere umfasst die Verwendung eines von Covestro AG unter der Artikelbezeichnung "DESMOPHEN NH 1420" zu beziehenden Rohstoffes als Polyasparaginsäureester.

Erfindungsgemäß umfasst die erste Komponente einen weiteren Bestandteil b) z.B. den Rohstoff Isophorondiisocyanat. Dieser Rohstoff ist z.B. von der Firma Covestro AG beispielsweise unter der Handelsbezeichnung "DESMODUR Z 4580" kommerziell erhältlich.

Alternativ umfasst die erste Komponente als weiteren Bestandteil b) z.B. ein anderes (Cyclo-)aliphatisches Isocyanat(gemisch), insbesondere die Rohstoffe Isophorondiisocyanat und/ oder Hexamethylendiisocyanat (HDI) und/oder Pentamethylendiisocyanat (PDI). Das HDI kann vorzugsweise in Mischform aus Poly(hexamethylendiisocyanat) und Poly(hexamethylendiisocyanat) vom Uretdion-Typ, und z.B. im Gewichtsverhältnis von 76:24, vorliegen. Diese Rohstoffe sind bei der Covestro AG z.B. unter den Bezeichnungen "DESMODUR N 3900" bzw. "DESMODUR N 31000" und Desmodur N 3400 kommerziell erhältlich.

Der als zweite Komponente einzusetzende Härter kann ebenfalls z.B. von der Firma Covestro AG unter der Bezeichnung "DESMODUR N 3900" oder "DESMODUR N 3400" oder DESMODUR N 31000 bezogen werden.

Die Erfindung erkennt, dass durch Mischung des ersten Bestandteils a) der ersten Komponente mit dem zweiten Bestandteil b) der ersten Komponente eine Polyaddition durch Harnstoff-Verknüpfung bei Raumtemperatur eintreten kann. Dabei verbinden sich die N-H-Gruppen des Asparaginsäureesters oder des Polyasparaginsäureesters, oder eines anderen Esters einer polyfunktionellen Aminocarbonsäure mit den NCO-Gruppen des Isophorondiisocyanates oder eines anderen Polyisocyanates zu variablen Makromolekülstrukturen. Diese können beispielsweise ein Molekulargewicht von ca. 1000 bis 15000 g/mol aufweisen. Die Ermittlung des durchschnittlichen Molekulargewichts (Zahlenmittel der Molmasse und/ oder Massenmittel der Molmasse) kann zum Beispiel durch Massenspektrometrie erfolgen.

Der guten Ordnung halber sei angemerkt, dass das Polyisocyanat somit die Polymerisierungskomponente für den Bestandteil a) bereitstellt.

Durch Einstellung des Mischungsverhältnisses der Bestandteile a) und b) kann ein Überschuss an NH-Gruppen erreicht werden, so dass sich die beiden Komponenten zu einem Klarlackfilm polyaddieren. Durch Variation des Mischungsverhältnisses der Bestandteile a) und b) können makromolekulare Ester einer polyfunktionellen Aminocarbonsäure entstehen, die vom Erfinder als negative Prepolymere bezeichnet werden. Diese negativen Prepolymere weisen vorteilhafte Eigenschaften gegenüber dem Bestandteil a) in seiner Ausgangsform auf. Hierzu gehören eine verbesserte Lagerstabilität und die Möglichkeit, die Viskosität zu variieren. Hierdurch werden niedrigere VOC-Werte als 420 g/mol in einer Bandbreite bis zu einem VOC-Gehalt von 200 g/L möglich.

Die Polyaddition mit negativen Prepolymeren ermöglicht die Erzielung vorteilhafter Eigenschaften des Klarlackes, die beim späteren Zusammenbringen der ersten Komponente mit der zweiten Komponente erreicht werden. Zu diesen vorteilhaften Eigenschaften können insbesondere, eine verbesserte Topfzeit, Trocknungszeit, Bearbeitungsfähigkeit, Oberflächenbeschaffenheit etc gehören.

Zudem werden unter Einsatz des erfindungsgemäßen Klarlackes die im Stand der Technik auftretenden Kocher weitgehend vermieden.

Gemäß einer vorteilhaften Ausgestaltung der Erfindung kann dem Bindemittel auch ein weiterer Bestandteil zugesetzt werden, der die Verfilmung verlangsamt. In Frage kommt als Verfilmungsverzögerer beispielsweise das von der Firma Covestro AG unter der Artikelbezeichnung "DESMOPHEN NH 1720" erhältliche Produkt.

Gemäß einer vorteilhaften Ausgestaltung der Erfindung ist der Härter von einem HDI (Hexamethylendiisocyanat) und/oder Pentamethylendiisocyanat (PDI) bereitgestellt. Ein solcher Härter kann beispielsweise von einer kommerziell erhältlichen Chemikalie bereitgestellt sein, die z.B. unter der Artikelbezeichnung DESMODUR N 3900 bzw. auch N

3400, N 31000, N 7300 eco bei der Firma Covestro AG zu beziehen ist.

Gemäß einer vorteilhaften Ausgestaltung der Erfindung beträgt das Mischungsverhältnis der Bestandteile Asparaginsäureester und Isophorondiisocyanat zwischen 90:10 und 75:25, insbesondere etwa 85:15 oder exakt 85:15.

Diese Ausgestaltung der Erfindung bietet die Möglichkeit einer besonders großen Stabilität des Bindemittels und einer hohen Reproduzierbarkeit der chemischen und physikalischen Eigenschaften des Bindemittels des ausgehärteten Klarlackes.

Zudem kann bei diesem Mischungsverhältnis die Topfzeit verlängert werden, und trotzdem eine schnelle Trocknung erreicht werden.

Eine Härtung des farbgebundenen Basis-Lacks durch forcierte Trocknung oder Zusätze ist bei dieser Ausführungsform nicht erforderlich.

Die Haftung ist gegenüber dem Stand der Technik verbessert. Auch das Ansehverhalten ist bezüglich Glanz und Homogenität sehr gut.

Das Bindemittel in Form des negativen Prepolymers ist bei diesem Mischungsverhältnis besonders gut lagerbeständig. Bei dem beschriebenen Mischungsverhältnis können die Polyadditionen zwischen dem Asparaginsäureester und dem Isophorondiisocyanat besonders vorteilhaft umgesetzt werden.

Zur Klarstellung sei angemerkt, dass sich im Rahmen dieser Patentanmeldung sämtliche angegebenen Mischungsverhältnisse auf Gewichtsverhältnisse der Stoffe beziehen.

Gemäß einer vorteilhaften Ausgestaltung der Erfindung weisen die erste Komponente und die zweite Komponente jeweils eine Spritzviskosität zur Eignung eines Auftrages mittels einer Lackierpistole auf. Diese Ausgestaltung der Erfindung ermöglicht eine Aufbringung des erfindungsgemäßen Klarlacks auf ein Fahrzeugteil auf herkömmliche Weise. Vorzugsweise weisen die erste Komponente und die zweite Komponente jeweils eine Spritzviskosität von vorzugsweise 13 bis 30 Sekunden (ISO 2431- Nr. 4 - Auslaufbecher mit 4 mm Düse) zur Eignung eines Auftrages mittels einer Lackierpistole auf.

Gemäß einer vorteilhaften Ausgestaltung der Erfindung weist die erste Komponente zur Haftvermittlung ein Acryl-Silan, insbesondere ein 3-Methacryloxypropyltrimethoxysilan, auf. Alternativ weist die erste Komponente zur Haftvermittlung eine andere funktionelle Silanverbindung mit ungesättigten, polymerisierbaren und hydrolysierbaren Gruppen, vorzugsweise ein (Meth)acryl-Silan auf. Diese Ausgestaltung der Erfindung ermöglicht einen Rückgriff auf herkömmliche, kommerziell erhältliche Chemikalien. Als Beispiel für ein geeignetes Acryl-Silan wird auf einen Artikel verwiesen, der unter der Bezeichnung "Dynasylan MEMO" bei der Firma Evonik Industries unter der CAS-Nr.: 2530-85-0 erhältlich ist.

Gemäß einer vorteilhaften Ausgestaltung der Erfindung ist das Acryl-Silan oder die funktionelle Silan-Verbindung in der ersten Komponente als Bestandteil in einem Mengenanteil von 0,5% bis 3 %, insbesondere von etwa 1 % oder exakt 1 % enthalten. Diese Ausgestaltung der Erfindung ermöglicht die Erzielung einer besonders guten Haftung der Klarlackschicht auf der darunter liegenden Basisschicht, also der Farbschicht. Diese Ausgestaltung der Erfindung ermöglicht weiter eine besonders hohe Kratzfestigkeit der Klarlackschicht und eine hohe Glätte der Klarlackschicht.

Gemäß einer vorteilhaften Ausgestaltung der Erfindung weisen die erste Komponente und die zweite Komponente ein Mischungsverhältnis auf, das einen NCO-gruppen-Überschuss bereitstellt. Diese Ausgestaltung der Erfindung, die auch als Übervernetzung bezeichnet wird, ermöglicht die Erzielung einer guten Haftung und einer hohen Härte.

Gemäß einer vorteilhaften Ausgestaltung der Erfindung weisen die erste Komponente und die zweite Komponente ein Mischungsverhältnis auf, das eine Übervernetzung der NH Gruppen der ersten Komponente zu den NCO-Gruppen der zweiten Komponente im Verhältnis NH : NCO zwischen 1,0 : 1,1 und 1,0 : 1,5, insbesondere von etwa 1,0 : 1,33 oder von 1,0 : 1,33, gewährleistet. Diese Ausgestaltung der Erfindung ermöglicht die Erzielung einer guten Haftung und einer hohen Härte.

Diese Ausgestaltung der Erfindung ermöglicht die Erzielung einer Übervernetzung. Aufgrund des Isocyanat-Überschusses kann eine sehr gute Verbindung zu dem Haftgrund eingegangen werden. Weitere, an sich nicht mehr benötigte Isocyanat-Moleküle können die Rest-Feuchtigkeit umsetzen.

Gemäß einer vorteilhaften Ausgestaltung der Erfindung umfasst die erste Komponente einen Reaktivverdünner, insbesondere eine funktionelle Silanverbindung, weiter insbesondere ein Alkoxysilan mit funktioneller Isocyanatgruppe, weiter insbesondere 3-Isocyanatopropyl-Trimethoxysilan. Diese Ausgestaltung der Erfindung ermöglicht die Bereitstellung eines Klarlackes mit einer sehr guten Haftung, einer sehr hohen Härte, und einer sehr guten Oberflächenglätte. Darüber hinaus kann ein Rückgriff auf kommerziell erhältliche Chemikalien erfolgen. Beispielsweise kann als Reaktiv-Verdünner eine Chemikalie verwendet werden, die unter der Bezeichnung "VESTANAT EP-M 95" von der Firma Evonik Industries bezogen werden kann.

Gemäß einer vorteilhaften Ausgestaltung der Erfindung umfasst der Härter ein Isocyanat und/ oder eine Mischung von mindestens zwei Isocyanaten, sowie deren Oligomerisationsprodukte, vorzugsweise vom Hexamethylendiisocyanat-Typ und/oder Pentamethylendiisocyanat-Typ und insbesondere vom Hexamethylendiisocyanat-Uretdion-Typ, vorzugsweise in Kombination mit Hexamethylen-1,6-diisocyanat Homopolymer. Diese Ausgestaltung der Erfindung ermöglicht einen Rückgriff auf kommerziell erhältliche Chemikalien.

Beispielsweise kann der erste Bestandteil von einem Produkt gebildet sein, das unter der Bezeichnung "DESMODUR N 31000" von der Firma Covestro AG bezogen werden kann. Der zweite Bestandteil kann ebenfalls kommerziell erhalten werden, und z.B. von der Firma Covestro AG unter der Bezeichnung "DESMODUR N 3400" bezogen werden.

Gemäß einer besonders vorteilhaften Ausgestaltung der Erfindung sind die beiden Bestandteile des Härters in dem Verhältnis 5-6 : 1 oder etwa in diesem Verhältnis miteinander vermischt.

Diese Ausgestaltung der Erfindung ermöglicht die Bereitstellung eines Klarlack-Systems, das ebenfalls die Vorteile von herkömmlichen Acryl-Standard-Klarlacken aufweist und kein Einbrennen erfordert.

Zusätzlich wird durch diese Ausgestaltung der Erfindung ein Klarlack-System mit weiter reduziertem Lösemittelgehalt bereitgestellt. Erzielt werden Klarlacke in der Klasse very high solid, das heißt sie weisen weniger als 420 g/ L VOC oder weniger als 300 g/ L VOC auf. Der Lack kann in einem VOC-Bereich zwischen 200 und 500 g/L eingestellt werden.

Gemäß einer weiteren vorteilhaften Ausgestaltung der Erfindung umfasst der Härter als Bestandteil eine Uretdion-haltige Substanz. Dies ermöglicht die Erzielung besonders guter Eigenschaften des ausgehärteten Klarlackes.

Gemäß einer vorteilhaften Ausgestaltung der Erfindung umfasst der Härter als Bestandteil Methylamylketon, insbesondere in einem Mengenanteil von 15% bis 35 %.

Diese Ausgestaltung der Erfindung ermöglicht die Erzielung besonders niedriger VOC-Werte, da das Material nur eine geringe Dichte aufweist. Außerdem wird hiermit die Viskosität reduziert. Schließlich trägt dieses Element zur Glanzverbesserung bei.

Besonders vorteilhafterweise beträgt der Mengenanteil des Bestandteiles Methylamylketon 25% oder etwa 25% im Härter.

Gemäß einer vorteilhaften Ausgestaltung der Erfindung umfasst der Härter als Bestandteil ein Keton der allgemeinen Formel R1-CO-R2 , wobei R1 = CH3-(CH2)× mit X zwischen 0 und 5 und R2 = CH3-$(CH2)_Y$ mit Y zwischen 0 und 5, vorzugsweise X = 0 und Y = 4 (2-Heptanon), insbesondere in einem Mengenanteil von 15 bis 35 Gew.-%, weiter insbesondere in einem Mengenanteil von 25 Gew.-%.

Das Verhältnis von NCO-Gruppen zu CO(Keton-)Gruppen beträgt z.B. 4 : 0,9 +/-0,2.

Der erfindungsgemäße Klarlack kann gemäß einer vorteilhaften Ausgestaltung der Erfindung auch Pigmente und/ oder Mattierungsmittel aufweisen. Er kann in Folge der Einbringung von Pigmenten oder Mattierungsmitteln als Decklack fungieren. Mattierungsmittel können beispielsweise die gewünschte Lichtstreuung generieren, um eine Art Mattschichtlackierung bereitzustellen.

Die Mattierungsmittel können z.B. Kalzium- oder Magnesiumverbindungen, Kieselsäureverbindungen, z.B. gefällte Kieselsäuren, Silikate, Siliziumpolymere oder Wachsverbindungen umfassen.

Die Mattierungsmittel, die dem Klarlack zugesetzt werden können, sind beispielsweise unter der Handelbezeichnung ACEMATT mit den Applikationsbezeichnungen OK412, OK500, OK520, von der Evonik Industries AG kommerziell erhältlich.

Für den Fall, dass der Lack ein Mattierungsmittel aufweist, bezeichnet man den Lack als Mattlack.

Die Erfindung bezieht sich des Weiteren auf ein Verfahren nach Anspruch 10.

Ausgehend von dem eingangs beschriebenen Stand der Technik besteht die Aufgabe der Erfindung darin, ein Verfahren anzugeben, das eine Aufbringung der Klarlackschicht bei Raumtemperatur mit nur geringer Trocknungszeit ermöglicht.

Die Erfindung löst diese Aufgabe mit einem Verfahren mit den Merkmalen des Anspruches 10.

Gemäß einer vorteilhaften Ausgestaltung der Erfindung umfasst das Verfahren zur Durchführung einer Fahrzeug-Lackierung, insbesondere einer Fahrzeugreparatur-Lackierung, die folgenden Schritte:

A. Bereitstellen einer ersten Komponente mit einem Bindemittel,

wobei das Bindemittel ein Reaktionsprodukt, insbesondere in Form eines negativen Prepolymers, umfasst, das aus einer Reaktionsmischung von wenigstens zwei Reaktionskomponenten a) und b) erhalten wird,

wobei die Reaktionskomponente a) Asparaginsäureester, insbesondere Polyasparaginsäureester, oder einen anderen Ester einer polyfunktionellen Aminocarbonsäure umfasst,

und wobei die Reaktionskomponente b) Isophorondiisocyanat, oder wenigstens ein anderes Polyisocyanat, vorzugsweise ein Hexamethylendiisocyanat, Hexamethylendiisocyanat-Typ und/oder Pentamethylendiisocyanat umfasst,

wobei die beiden Reaktionskomponenten a) und b) in einem Mischungsverhältnis zwischen 75:25 und 90:10, insbesondere etwa 85:15 oder 85:15, miteinander gemischt sind,

B. Bereitstellen einer zweiten Komponente in Form eines Härters, insbesondere eines Härters aus HDI (Hexamethylendiisocyanat) und/oder Pentamethylendiisocyanat (PDI),

C. Zuführen der beiden Komponenten zu einer Applikationsvorrichtung (z.B. Lackierpistole, Pinsel, Lackierwalze oder Tauchvorrichtung) und Mischen der beiden Komponenten in der Applikationsvorrichtung.

D. Aufbringen der beiden miteinander gemischten Komponenten als Klarlackschicht, insbesondere auf ein Fahrzeugteil, insbesondere auf eine zu reparierende Stelle einer Autolackierung.

Das erfindungsgemäße Verfahren dient insbesondere zur Bereitstellung einer Fahrzeug-Reparaturlackierung. Es ist von der Erfindung aber auch umfasst, dass das erfindungsgemäße Verfahren bei der Fertigung von Fahrzeugteilen, insbesondere bei Kleinserien von LKW-Bauteilen oder von Bauteilen anderer Nutzfahrzeuge, eingesetzt wird.

Gemäß einer vorteilhaften Ausgestaltung der Erfindung umfasst das Verfahren zur Durchführung einer Fahrzeug-Lackierung den folgenden Schritt:
E. Aushärten und/ oder Trocknen der Klarlackschicht bei Raumtemperatur und/oder ohne Betreiben einer Heizung.

Gemäß einer vorteilhaften Ausgestaltung der Erfindung umfasst das Verfahren zur Durchführung einer Autoreparatur-Lackierung den folgenden Schritt:
F) Bearbeiten der ausgetrockneten Klarlackschicht, z.B. Polieren, innerhalb von weniger als 60 Minuten, insbesondere innerhalb von weniger als 45 Minuten, nach Durchführung von Schritt d).

Bei dieser Ausführungsform kann insbesondere vorgesehen sein, dass die Klarlackschicht bereits nach 10-20 Minuten staubtrocken ausgebildet ist, und nach etwa 45 Minuten handhabbar ist und nach etwa 60 Minuten polierbar ist. Die exakten Trocknungszeiten hängen u.a. von der Luftfeuchtigkeit ab.

Vorteilhaft wird Schritt F) durchgeführt bei einer relativen Luftfeuchtigkeit zwischen 40 und 60%.

Die Erfindung bezieht sich des Weiteren auf die Verwendung eines Gemisches nach Anspruch 13.

Die Aufgabe dieser Erfindung besteht darin, eine neue Verwendung für ein bislang nicht bekanntes Gemisch aus zwei an sich bekannten Stoffen bereitzustellen.

Die Erfindung löst diese Aufgabe mit den Merkmalen des Anspruches 14.

Die Erfindung bezieht sich des Weiteren auf ein Bindemittel nach Anspruch 14.

Davon ausgehend besteht die Erfindung darin, ein Bindemittel bereitzustellen, das zur Bereitstellung eines Klarlackes geeignet ist.

Die Erfindung löst diese Aufgabe mit den Merkmalen des Anspruches 14.

Die Erfindung bezieht sich des Weiteren auf eine Lackzubereitung nach Anspruch 15.

Die Aufgabe der Erfindung besteht darin, eine Lackzubereitung anzugeben, mit der ein Füller, ein Primer oder ein Füll-Primer für Reparaturzwecke bereitgestellt werden kann.

Die Erfindung löst diese Aufgabe mit den Merkmalen des Anspruches 17.

Die Lackzubereitung kann zusätzliche Füllstoffe umfassen, um im Sinne eines herkömmlichen Füllers zu fungieren.

Die ausgehärtete Lackzubereitung kann schleiffähig oder schleifbar sein. Die Lackzubereitung kann, um im Sinne eines Primers zu fungieren, z.B. auch Rostschutzmittel aufweisen. Sie kann auch Grundierungsmittel und Haftvermittlungsmittel umfassen.

Der Füller kann z.B. nachfolgend mit einem farbgebenden Basislack und einer Klarlackschicht oder einer Decklackschicht überlackiert werden.

Als Füllmittel kommen u.a. folgende Produkte in Frage:

- Calciumcarbonat
- Talkum
- Calciumsulfat

Dies alles sind Füllmittel, die die ausgehärtete Schicht schleifbar machen.

Als Rostschutzmittel kommt z. B. Zinkphosphat in Betracht.

Als Haftvermittler können Siliziumverbindungen, Talkum, Silane, Phosphorsäureester oder gesättigte Polyester Anwendung finden.

Die Erfindungen nach den Ansprüchen 15 bis 17 verstehen sich am besten in Würdigung der vorherigen Ansprüche.

Die Erfindungen nach den Ansprüchen 15 bis 17 umfassen jeweils Ausführungsbeispiele, die eines oder mehrere Merkmale der Erfindung nach den Ansprüchen 1 bis 14 umfassen können.

Weitere Vorteile der Erfindung ergeben sich aus den nicht zitierten Unteransprüchen sowie anhand der nachfolgenden Beschreibung der in den Zeichnungen dargestellten Ausführungsbeispiele.

Darin zeigen:

Fig. 1 In einer perspektivischen, schematischen Ansicht einen Mehrschichtaufbau eines erfindungsgemäßen Lack-Systems mit einer Lackschicht aus einem erfindungsgemäßen Klarlack,

Fig. 2 in einer schematischen Darstellung eine Strukturformel für einen Asparaginsäureester, wie er als Bestandteil a) der ersten Komponente in dem erfindungsgemäßen Klarlack eingesetzt wird,

Fig. 3 in einer schematischen Darstellung eine Strukturformel eines Asparaginsäureesters, wie er unter der Artikelbezeichnung "DESMOPHEN NH 1420/1422" von der Firma Covestro AG erhältlich ist,

Fig. 4 in einer schematischen Strukturformeldarstellung ein Molekül eines Isophorondiisocyanat-Monomers, wie es als weiterer Bestandteil der ersten Komponente des erfindungsgemäßen Klarlackes eingesetzt wird, unter Veranschaulichung der NCO-Gruppen,

Fig. 5 in schematischen Strukturformeldarstellung die Reaktion eines Moleküls eines Aspäraginsäureesters, dessen Rest mit R bezeichnet ist, mit einem Molekül eines Isocyanates, dessen Rest mit R" bezeichnet ist, und in der rechten Hälfte der Fig. 5 das nach Polyaddition erreichte Molekül bzw. die chemische Verbindung in einer Strukturformel,

Fig. 6 in schematischer Darstellung einer chemischen Strukturformel ein Molekül eines Haftvermittlers eines Acryl-Silans, in Form eines 3-Methacryloxypropyltrimethoxy-silan,

Fig. 7 in einer Darstellung gemäß Fig. 2 eine schematische Darstellung einer Strukturformel für einen Bestandteil b) eines Moleküls einer polyfunktionellen Aminocarbonsäure, wobei gilt: $R^{1,\ 2,\ 3,\ 4} = CH_3\text{-}(CH_2)_y$, wobei y zwischen 0 und 4, vorzugsweise $R^1 = R^2 = R^3 = R^4$ mit y = 1, alternativ $R^1 \neq R^2 \neq R^3 \neq R^4$,

Fig. 8 in einer Übersichtsdarstellung für drei unterschiedliche, unter der Bezeichnung DESMOPHEN kommerziell erhältliche Stoffe, unter Angabe der Artikelnummer und in der linken Spalte der zugehörigen chemischen Strukturformel,

Fig. 9 in einer Darstellung gemäß Fig. 4 ein Molekül eines Isophorondiisocyanat-Dimers vom Uretdion-Typ,

Fig. 10 in einer Darstellung gemäß Fig. 9 eine schematische Strukturformeldarstellung eines Moleküls eines anderen beispielhaften Isophorondiisocyanat-Dimers vom Uretdion-Typ,

Fig. 11 in einer Darstellung gemäß Fig. 9 eine Strukturformel eines Moleküls eines Isophorondiisocyanat-Trimers vom Isocyanurat-Typ,

Fig. 12 in einer Darstellung gemäß Fig. 6 eine chemische Strukturformel eines Moleküls eines alternativen Haftvermittlers, wobei gilt: $R^{1,\ 3} = CH_3\text{-}(CH_2)_y$, bzw. $R^2 = (CH_2)_y$ wobei y zwischen 0 und 5 und $R^1$ = oder $\neq R^3$, und

Fig. 13 in einer schematischen Darstellung eine chemische Strukturformel eines Ausführungsbeispiels eines negativen Prepolymers, das aus DESMOPHEN NH 1420 und DESMODUR Z 4580 zusammengesetzt ist, und das ein Molekulargewicht von 2331g /mol aufweist.

Die Ausführungsbeispiele der Erfindung werden auch anhand und in Bezug zu der nachfolgenden Beschreibung der Zeichnungen erläutert:
Ausführungsbeispiele der Erfindung sind in der nachfolgenden Figurenbeschreibung, auch unter Bezugnahme auf die Zeichnungen, beispielhaft beschrieben. Dabei werden der Übersichtlichkeit halber - auch soweit unterschiedliche Ausführungsbespiele betroffen sind - gleiche oder vergleichbare Teile oder Elemente oder Bereiche mit gleichen Bezugszeichen, teilweise unter Hinzufügung kleiner Buchstaben, bezeichnet.

Merkmale, die nur in Bezug zu einem Ausführungsbeispiel beschrieben sind, können im Rahmen der Erfindung auch bei jedem anderen Ausführungsbeispiel der Erfindung vorgesehen werden. Derartig geänderte Ausführungsbeispiele sind - auch wenn sie in den Zeichnungen nicht dargestellt sind - von der Erfindung mit umfasst.

Alle offenbarten Merkmale sind für sich erfindungswesentlich. In die Offenbarung der Anmeldung wird hiermit auch der Offenbarungsinhalt der zugehörigen Prioritätsunterlagen (Abschrift der Voranmeldung) sowie der zitierten Druckschriften und der beschriebenen Vorrichtungen des Standes der Technik vollinhaltlich mit einbezogen, auch zu dem

Zweck, einzelne oder mehrere Merkmale dieser Unterlagen in einen oder in mehrere Ansprüche der vorliegenden Anmeldung mit aufzunehmen.

Ein Ausführungsbeispiel eines erfindungsgemäßen Klarlackes wird nachfolgend erläutert:

Figur 1 zeigt ein erfindungsgemäßes, insgesamt mit dem Bezugszeichen 10 bezeichnetes und mit dem erfindungsgemäßen Klarlack ausgestattetes Mehrschichtsystem. Das Mehrschichtsystem 10 kann beispielsweise eine Untergrundschicht 11, also ein Substrat, eine Spachtelschicht 12, eine Haftgrundierungsschicht 13, eine Füllerschicht 14 und einen Basislack 15 enthalten. Das Mehrschichtsystem umfasst bei dem Ausführungsbeispiel der Figur 1 eine Basislackschicht 15.

Die übrigen Schichten 11 bis 14 sind bei diesem Ausführungsbeispiel optional. Sie werden aber häufig bei der Durchführung von Autoreparatur-Lackierarbeiten vorgesehen.

Auf die Basislackschicht 15 wird gemäß dem erfindungsgemäßen Autolack-Reparaturverfahren eine Klarlackschicht 16 aufgetragen. Diese ist transparent, oder alternativ mattiert. Die Klarlackschicht 16 bietet im ausgehärteten Zustand Schutz des darunter befindlichen Schichtsystems und gewährleistet eine hohe UV- und Witterungsbeständigkeit sowie eine Brillanz.

Figur 2 zeigt in einer Strukturformel beispielhaft den Aufbau eines wesentlichen Bestandteils der ersten Komponente des Klarlacks, nämlich eines Asparaginsäureesters. Mit "X" werden Brücken bezeichnet, die bei unterschiedlichen, kommerziell erhältlichen Produkten, die z.B. in der später erläuterten Figur 8 dargestellt sind, variieren können.

Von der Firma Covestro AG ist beispielsweise ein Asparaginsäureester unter der Bezeichnung "DESMOPHEN NH 1420" bzw. "DESMOPHEN NH 1422" bekannt, dessen Strukturformel in Figur 3 abgebildet ist. Andere, im Rahmen der Erfindung verwendbare Asparaginsäureester sind von der Firma Covestro AG , z.B. unter den Artikelbezeichnungen "DESMOPHEN NH 1520" oder "DESMOPHEN NH 1220" oder "DESMOPHEN NH 1720" kommerziell erhältlich, und weisen andere, als die in Figur 3 dargestellte Brücken, auf.

Als Asparaginsäureester im Sinne der vorliegenden Patentanmeldung wird in fachmännisch üblicher Weise ein Asparaginsäureester der allgemeinen Formel

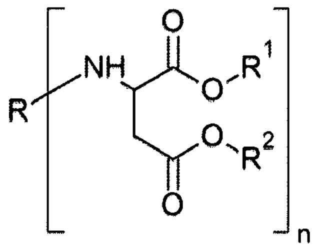

bezeichnet, in der R für einen n-wertigen organischen Rest, mit n für eine ganze Zahl von mindestens 2, steht. $R^1$ und $R^2$ stehen für gleiche oder verschiedene organische Reste, die weitgehend inert gegenüber Reaktionen mit Isocyanatgruppen sind. Besonders bevorzugt sind Verbindungen, in denen $R^1$ und $R^2$ für Ethylreste stehen. Solche Verbindungen sind beispielsweise in der DE 10 2006 002 153 A1 beschrieben.

Figur 4 zeigt als weiteren erfindungsgemäßen Bestandteil der ersten Komponente des Klarlackes eine Strukturformel eines Isophorondiisocyanates. Von Bedeutung ist, dass sich die NCO-Gruppen des Isophorondiisocyanates mit den NH-Gruppen des Asparaginsäureesters verbinden können.

Diese Verbindung kommt in der Strukturformel in Figur 5 zum Ausdruck. Die Verbindung ist auch für die Filmbildung verantwortlich.

Figur 5 zeigt im rechten Teil die Strukturformel der erhaltenen Verbindung der beiden Komponenten. Es handelt sich damit also um die Darstellung der Reaktion zum Bindemittel, das im Rahmen dieser Patentanmeldung auch als negatives Prepolymer bezeichnet wird.

Dieses wird dauerhaft, insbesondere luftdicht verschlossen, separat von der zweiten Komponente, dem in den Figuren nicht dargestellten Härter, aufbewahrt. Am Einsatzort wird das Bindemittel mit dem Härter zusammengebracht und die Vernetzungsreaktion kann dann durchgeführt werden.

Im Folgenden werden beispielhaft Ausführungsbeispiele eines Klarlackes und deren Zusammensetzung beschrieben:

Die Prozentangaben bei den Zusammensetzungen der Ausführungsbeispiele, und auch an den übrigen Stellen dieser Patentanmeldung, beziehen sich auf relative Mengenangaben in Gewichtseinheiten.

1. <u>Ausführungsbeispiel:</u>

I.Bestandteile der ersten Komponente:

a) Asparaginsäureester ("DESMOPHEN NH 1420") 85%

b) Isophorondiisocyanat ("DESMODUR Z 4580") 15% II. Bestandteile der zweiten Komponente:

c) HDI (Hexamethylendiisocyanat) als Härterkomponente, z.B. "DESMODUR 3900"

Die Komponenten werden im Mischungsverhältnis 10 : 6,1 miteinander vermischt.
Beide Reaktivkomponenten (insgesamt 60 Gew.-%) werden in 40 Gew.-% in vorgelegtes, aliphatisches und/ oder aromatisches Lösemittel unter Rühren für mehrere Stunden je nach Ansatzgröße gelöst und wenigstens über Nacht konfektioniert.
Alternativ zum Isophorondiisocyanat können z.B. Hexamethylendiisocyanat ("DESMODUR N 31000") 15 Gew.-% oder DESMODUR N 31000, N 3900, N3400 bzw. Pentamethylendiisocyanat ("DESMODUR N 7300 eco") oder Gemische dessen verwendet werden.

2. Ausführungsbeispiel:

I.Bestandteile der ersten Komponente:

a) Asparaginsäureester ("DESMOPHEN NH 1420") 84,5%

b) Isophorondiisocyanat ("DESMODUR Z 4580") 14,5%

c) 3-Methacryloxypropyltrimethoxysilan (Dynasylan MEMO) 1%

II. Bestandteile der zweiten Komponente:
d) HDI (Hexamethylendiisocyanat) als Härterkomponente, "DESMODUR N 3900"

Die Komponenten werden im Mischungsverhältnis 10 : 6,1 miteinander vermischt.
Beide Reaktivkomponenten (insgesamt 60 Gew.-%) werden in 40 Gew.-% in vorgelegtes, aliphatisches und/ oder aromatisches Lösemittel unter Rühren für mehrere Stunden je nach Ansatzgröße gelöst und wenigstens über Nacht konfektioniert.
Alternativ zum Isophorondiisocyanat kann Hexamethylendiisocyanat ("DESMODUR N 31000") 15 Gew.-% verwendet werden.

3. Ausführunqsbeispiel:

I.Bestandteile der ersten Komponente:

a) Asparaginsäureester ("DESMOPHEN NH 1420") 85%

b) Isophorondiisocyanat ("DESMODUR Z 4580") 15% II.Bestandteile der zweiten Komponente:

c) HDI (Hexamethylendiisocyanat) als Härterkomponente, z.B. "DESMODUR N 31000"

d) HDI (Hexamethylendiisocyanat) als Härterkomponente, z.B. "DESMODUR N 3400"

Das Mischungsverhältnis von "DESMODUR N 31000" und "DESMODUR N 3400" beträgt 5-6 : 1.
Die Komponenten (erste Komponente und zweite Komponente) werden zueinander im Mischungsverhältnis 10 : 6,1 miteinander vermischt.
Beide Reaktivkomponenten (insgesamt 60 Gew.-%) werden in 40 Gew.-% in vorgelegtes, aliphatisches und/ oder aromatisches Lösemittel unter Rühren für mehrere Stunden je nach Ansatzgröße gelöst und wenigstens über Nacht konfektioniert.

Alternativ zum Isophorondiisocyanat kann Hexamethylendiisocyanat ("DESMODUR N 31000") 15 Gew.-% verwendet werden.

4. Ausführungsbeispiel:

I.Bestandteile der ersten Komponente:

a) Asparaginsäureester ("DESMOPHEN NH 1420") 85%

b) Isophorondiisocyanat ("DESMODUR Z 4580") 15%

II.Bestandteile der zweiten Komponente:

c) HDI (Hexamethylendiisocyanat) als Härterkomponente, z.B. "DESMODUR N 31000"

d) HDI (Hexamethylendiisocyanat) als Härterkomponente, z.B. "DESMODUR N 3400"

Das Mischungsverhältnis von "DESMODUR N 31000" und "DESMODUR N 3400" beträgt 5-6:1.

MAK (Methylamylketon), in einer Menge von 25% bezogen auf die zweite Komponente

Die Komponenten werden im Mischungsverhältnis 10 : 6,1 miteinander vermischt.
Beide Reaktivkomponenten (insgesamt 60 Gew.-%) werden in 40 Gew.-% in vorgelegtes, aliphatisches und/ oder aromatisches Lösemittel unter Rühren für mehrere Stunden je nach Ansatzgröße gelöst und wenigstens über Nacht konfektioniert.
Alternativ zum Isophorondiisocyanat kann Hexamethylendiisocyanat ("DESMODUR N 31000") 15 Gew.-% verwendet werden.

5. Ausführungsbeispiel:

I.Bestandteile der ersten Komponente:

a) Asparaginsäureester ("DESMOPHEN NH 1420") 85%

b) Isophorondiisocyanat ("DESMODUR Z 4580") 15%

c) Reaktivverdünner (VESTANAT EP-M 95) 1%

II. Bestandteile der zweiten Komponente:

d) HDI (Hexamethylendiisocyanat) als Härterkomponente, z.B. "DESMODUR N 31000"

e) HDI (Hexamethylendiisocyanat) als Härterkomponente, z.B. "DESMODUR N 3400"

Das Mischungsverhältnis von "DESMODUR N 31000" und "DESMODUR N 3400" beträgt 5-6:1.

Die Komponenten werden im Mischungsverhältnis 10 : 6,1 miteinander vermischt.

Gemäß einer besonders vorteilhaften Ausgestaltung der Erfindung wird bei dem Klarlack eine Mischung der beiden Komponenten in einem Verhältnis vorgenommen, das die Erzielung eines Isocyanatüberschusses bereitstellt.
Beispielhaft soll anhand der nachfolgenden Berechnungen der Äquivalenzmassen, unter Berücksichtigung der technischen Datenblätter der von Covestro AG erhältlichen Stoffe NH 1420 und Z 4580 die Berechnung der Gewichtsanteile des negativen Prepolymers in Bezug zu dem HDI-Isocyanat durchgeführt werden:

Berechnung der Gewichtsteile NH1420/Z4580-Prepolymer zu HDI-Isocyanat bezogen auf nicht-flüchtige Anteile (nfA), wie z. B. VOCs:

**1. Berechnung Amingehalt %NH:**

$$\%NH = \frac{\text{Aminzahl} \cdot M_{(NH)}}{1000 \cdot M_{(KOH)}} \cdot 100$$

(Umrechnung mg zu g KOH)

Die Aminzahl wird mittels Titration bestimmt und im technischen Merkblatt aufgeführt.

$M_{(KOH)}$ = 56,1 g/mol
$M_{(NH)}$ = 15 g/mol
**$\%NH_{(NH1420)}$= 5,38 (Durchschnitt in 100 Gewichtsteilen)**

**2. Berechnung Amingehalt Prepolymer:**

**$\%NH_{(NH1420)}$ = 5,38 • 0,85 (Anteil) = 4,57**
**$\%NCO_{(Z4580)}$ = 12,0 • 0,15 (Anteil) = 1,8**
Bei der Polyaddition wird eine NH-Gruppe (M = 15 g/mol) mit einer NCO-Gruppe (M = 42 g/mol) umgesetzt:

$$\frac{42}{1{,}8} = \frac{15}{X} \qquad X = 0{,}64$$

$\%NH_{(Prepolymer)}$ = 5,38 • 0,85 - 0,64 = 3,93

**3. Berechnung der benötigten Gewichtsteile *w* vom HDI:**

$$w(N3900) = \frac{M_{(NCO)} \cdot 100\ (\text{Gewichtsteile}) \cdot \%NH_{(Prepolymer)} \cdot 1{,}3\ (\text{Übervernetzung})}{M_{(NH)} \cdot \%NCO_{(N3900)}}$$

w(N3900) = 60,9
$M_{(NCO)}$ = 42,0 g/mol
$M_{(NH)}$ = 15 g/mol
$\%NCO_{(N3900)}$ = 23,5 (aus technischem Merkblatt)

Für 100 g NH1420/Z4850-Prepolymer werden bei diesem Ausführungsbeispiel somit 60,9 g Desmodur N 3900 benötigt.
Diese Mengenberechnung ist freilich nur beispielhaft zu verstehen.
Entscheidend für die Berechnung des Mengen-Verhältnisses des Bindemittels zu dem Härter ist insbesondere die Kenntnis der Amingehalte, daraus die Berechnung der Gewichtsanteile und der gewünschte Grad an Übervernetzung.

## Patentansprüche

1. Klarlack, insbesondere für ein Beschichtungssystem (10) einer Fahrzeugreparatur-Lackierung, das mehrere Schichten (11, 12, 13, 14, 15) umfasst, insbesondere wenigstens eine Basislackschicht (15) und eine Klarlackschicht (16), wobei der Klarlack wenigstens zwei Komponenten umfasst, wobei die erste Komponente von einem Bindemittel und

die zweite Komponente von einem Härter bereitgestellt ist, wobei das Bindemittel ein Reaktionsprodukt, insbesondere in Form eines negativen Prepolymers, umfasst, das aus einer Reaktionsmischung von wenigstens zwei Reaktionskomponenten a) und b) erhalten wird,

wobei die Reaktionskomponente a) Asparaginsäureester, insbesondere Polyasparaginsäureester, oder einen anderen Ester einer polyfunktionellen Aminocarbonsäure umfasst,
und wobei die Reaktionskomponente b) Isophorondiisocyanat, oder wenigstens ein anderes Polyisocyanat, vorzugsweise ein Hexamethylendiisocyanat und/oder Pentamethylendiisocyanat (PDI), umfasst.

**2.** Klarlack nach Anspruch 1, **dadurch gekennzeichnet, dass** der Härter ein aliphatisches Polyisocyanat, vorzugsweise ein C3-C13 Alkylendiisocyanat, insbesondere ein Hexamethylendiisocyanat (HDI) und/oder Pentamethylendiisocyanat (PDI), und/ oder ein Isophorondiisocyanat umfasst.

**3.** Klarlack nach Anspruch 1 oder 2, **dadurch gekennzeichnet, dass** das Mischungsverhältnis der Reaktionskomponenten a) und b) zwischen 90:10 und 75:25 beträgt, insbesondere etwa 85:15 oder 85:15 beträgt.

**4.** Klarlack nach einem der vorangegangenen Ansprüche, **dadurch gekennzeichnet, dass** die erste Komponente zur Haftvermittlung ein Acryl-Silan, insbesondere ein 3-Methacryloxypropyltrimethoxysilan, oder eine andere funktionelle Silanverbindung mit ungesättigten, polymerisierbaren und hydrolysierbaren Gruppen, vorzugsweise ein (Meth)acryl-Silan, aufweist.

**5.** Klarlack nach Anspruch 4, **dadurch gekennzeichnet, dass** das Acryl-Silan oder die funktionelle Silanverbindung in der ersten Komponente als Bestandteil in einem Mengenanteil von 0,5% bis 3 %, insbesondere von etwa 1 % oder 1 % enthalten ist.

**6.** Klarlack nach einem der vorangegangenen Ansprüche, **dadurch gekennzeichnet, dass** die erste Komponente und die zweite Komponente ein Mischungsverhältnis aufweisen, das einen Isocyanat-Überschuss bereitstellt, wobei vorzugsweise die erste Komponente und die zweite Komponente ein Mischungsverhältnis aufweisen, das eine Übervernetzung der N-H-Gruppen der ersten Komponente zu den NCO-Gruppen der zweiten Komponente im Verhältnis NH : NCO zwischen 1,0 : 1,1 und 1,0 : 1,5, insbesondere von etwa 1,0 : 1,33 oder von 1,0 : 1,33, gewährleistet.

**7.** Klarlack nach einem der vorangegangenen Ansprüche, **dadurch gekennzeichnet, dass** die erste Komponente einen Reaktivverdünner, insbesondere eine funktionelle Silanverbindung, weiter insbesondere ein Alkoxysilan mit funktioneller Isocyanatgruppe, weiter insbesondere 3-Isocyanatopropyl-Trimethoxysilan, umfasst.

**8.** Klarlack nach einem der vorangegangenen Ansprüche, **dadurch gekennzeichnet, dass** der Härter eine Mischung von wenigstens zwei Bestandteilen umfasst, wobei ein erster Bestandteil ein Hexamethylendiisocyanat, insbesondere als Oligomersiationsprodukt vom Uretdion-Typ, und ein Hexamethylen-1,6-diisocyanat Homopolymer umfasst, und wobei ein zweiter Bestandteil ein Hexamethylendiisocyanat Dimer umfasst.

**9.** Klarlack nach einem der vorangegangenen Ansprüche, **dadurch gekennzeichnet, dass** der Härter als Bestandteil ein Keton der allgemeinen Formel R1-CO-R2, wobei R1 = CH3-(CH2)x mit X zwischen 0 und 5 und R2 = CH3-$(CH2)_Y$ mit Y zwischen 0 und 5, vorzugsweise X = 0 und Y = 4 (2-Heptanon) umfasst, insbesondere in einem Mengenanteil von 15 bis 35 Gew.-%, weiter insbesondere in einem Mengenanteil von 25 Gew.-%.

**10.** Verfahren zur Durchführung einer Lackierung, insbesondere einer Fahrzeug-Lackierung oder einer Fahrzeugreparatur-Lackierung umfassend die folgenden Schritte:

A. Bereitstellen einer ersten Komponente mit einem Bindemittel,

wobei das Bindemittel ein Reaktionsprodukt, insbesondere in Form eines negativen Prepolymers, umfasst, das aus einer Reaktionsmischung von wenigstens zwei Reaktionskomponenten a) und b) erhalten wird,

wobei die Reaktionskomponente a) Asparaginsäureester, insbesondere Polyasparaginsäureester, oder einen anderen Ester einer polyfunktionellen Aminocarbonsäure umfasst,
und wobei die Reaktionskomponente b) Isophorondiisocyanat, oder wenigstens ein anderes Polyisocyanat, vorzugsweise ein Hexamethylendiisocyanat und/ oder Pentamethylendiisocyanat, umfasst,

wobei die beiden Reaktionskomponenten a) und b) in einem Mischungsverhältnis zwischen 75:25 und 90:10, insbesondere etwa 85:15 oder 85:15, miteinander gemischt sind,

B. Bereitstellen einer zweiten Komponente in Form eines Härters, insbesondere eines Härters aus HDI (Hexamethylendiisocyanat) und/ oder PDI (Pentamethylendiisocyanat),
C. Zuführen der beiden Komponenten zu einer Applikationsvorrichtung, wie Lackierpistole, Pinsel, Lackierwalze oder Tauchvorrichtung, und Mischen der beiden Komponenten in der Applikationsvorrichtung.
D. Aufbringen der beiden miteinander gemischten Komponenten als Klarlackschicht, insbesondere auf ein Fahrzeugteil oder auf eine zu reparierende Stelle einer Autolackierung.

**11.** Verfahren nach Anspruch 10 **gekennzeichnet durch** den folgenden Schritt:
E. Aushärten und/ oder Trocknen der Klarlackschicht bei Raumtemperatur und/oder ohne Betreiben einer Heizung.

**12.** Verfahren nach Anspruch 10 oder 11 **gekennzeichnet durch** den folgenden Schritt:
F. Bearbeiten der ausgetrockneten Klarlackschicht, z.B. Polieren, innerhalb von weniger als 60 Minuten, insbesondere innerhalb von weniger als 45 Minuten, nach Durchführung von Schritt d).

**13.** Verwendung eines Bindemittels, wobei das Bindemittel ein Reaktionsprodukt, insbesondere in Form eines negativen Prepolymers, umfasst, das aus einer Reaktionsmischung von wenigstens zwei Reaktionskomponenten a) und b) erhalten wird,

wobei die Reaktionskomponente a) Asparaginsäureester, insbesondere Polyasparaginsäureester, oder einen anderen Ester einer polyfunktionellen Aminocarbonsäure umfasst,
und wobei die Reaktionskomponente b) Isophorondiisocyanat, oder wenigstens ein anderes Polyisocyanat, vorzugsweise ein Hexamethylendiisocyanat und/ oder Pentamethylendiisocyanat, umfasst,

wobei das Mischungsverhältnis der beiden Reaktionskomponenten a) und b) zwischen 75:25 und 90:10 beträgt, insbesondere in einem Mischungsverhältnis von etwa 85:15 oder 85:15 liegt, als eine mit einem Härter zu kombinierende Komponente in einem Klarlack.

**14.** Bindemittel für einen Klarlack, insbesondere für einen Klarlack nach einem der Ansprüche 1 bis 9, wobei das Bindemittel ein Reaktionsprodukt, insbesondere in Form eines negativen Prepolymers, umfasst, das aus einer Reaktionsmischung von wenigstens zwei Reaktionskomponenten a) und b) erhalten wird,

wobei die Reaktionskomponente a) Asparaginsäureester, insbesondere Polyasparaginsäureester, oder einen anderen Ester einer polyfunktionellen Aminocarbonsäure umfasst,
und wobei die Reaktionskomponente b) Isophorondiisocyanat, oder wenigstens ein anderes Polyisocyanat, vorzugsweise ein Hexamethylendiisocyanat und/ oder Pentamethylendiisocyanat, umfasst.

**15.** Lackzubereitung zur Bereitstellung eines Füllers, Primers, oder Füll-Primers für Reparaturzwecke, wobei die Lackzubereitung wenigstens zwei Komponenten umfasst,

wobei der Klarlack wenigstens zwei Komponenten umfasst, wobei die erste Komponente von einem Bindemittel und die zweite Komponente von einem Härter bereitgestellt ist, wobei das Bindemittel ein Reaktionsprodukt, insbesondere in Form eines negativen Prepolymers, umfasst, das aus einer Reaktionsmischung von wenigstens zwei Reaktionskomponenten a) und b) erhalten wird,
wobei die Reaktionskomponente a) Asparaginsäureester, insbesondere Polyasparaginsäureester, oder einen anderen Ester einer polyfunktionellen Aminocarbonsäure umfasst,
und wobei die Reaktionskomponente b) Isophorondiisocyanat, oder wenigstens ein anderes Polyisocyanat, vorzugsweise ein Hexamethylendiisocyanat und/ oder Pentamethylendiisocyanat (PDI), umfasst.

Fig. 1

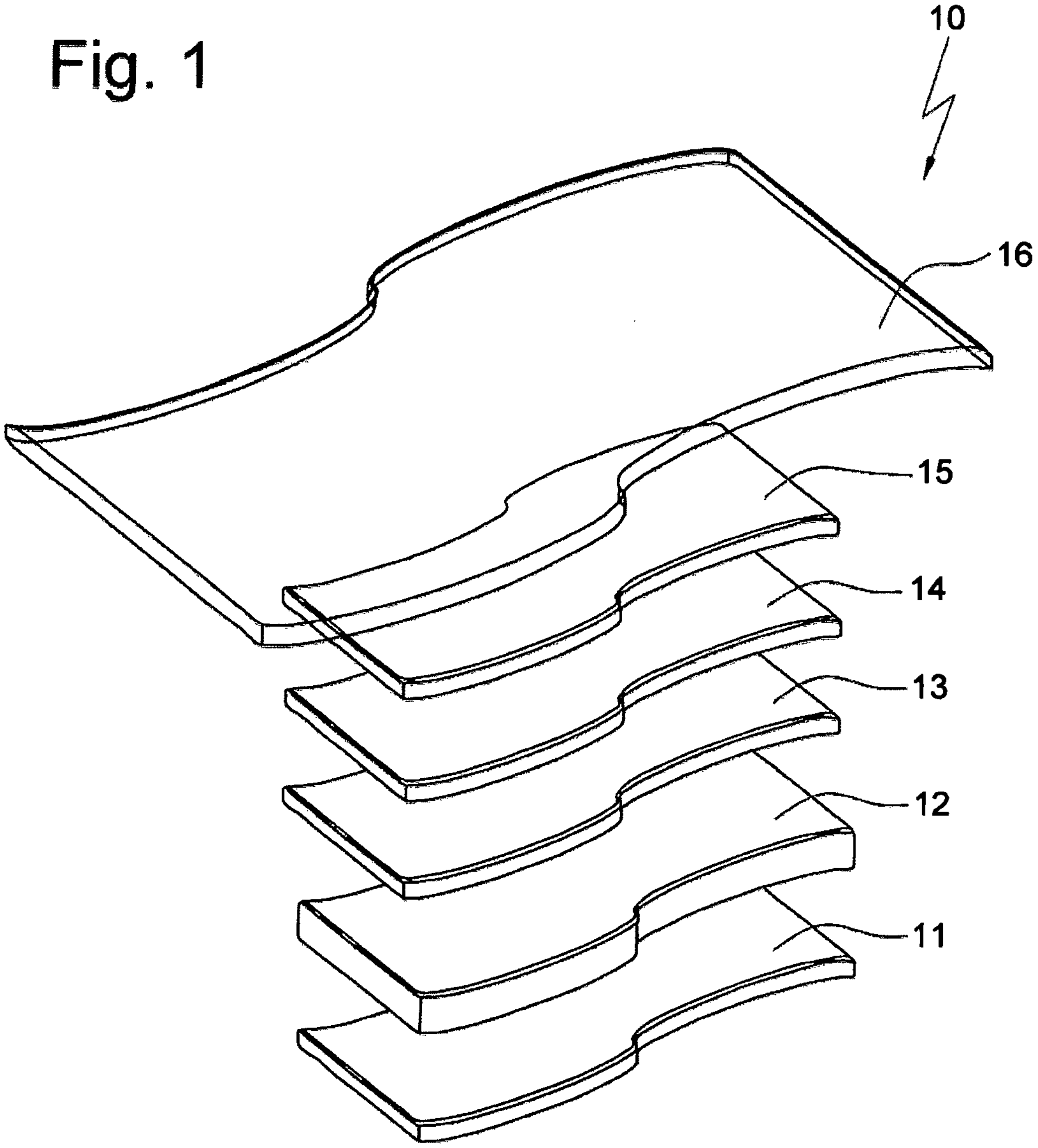

Fig. 2

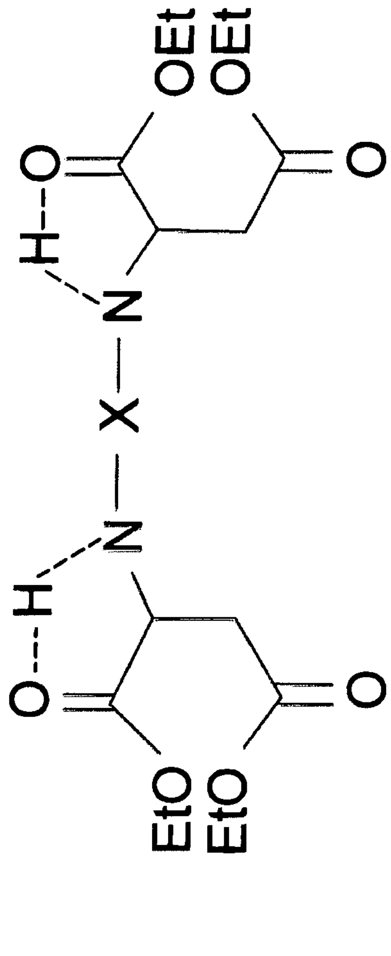

Fig. 3

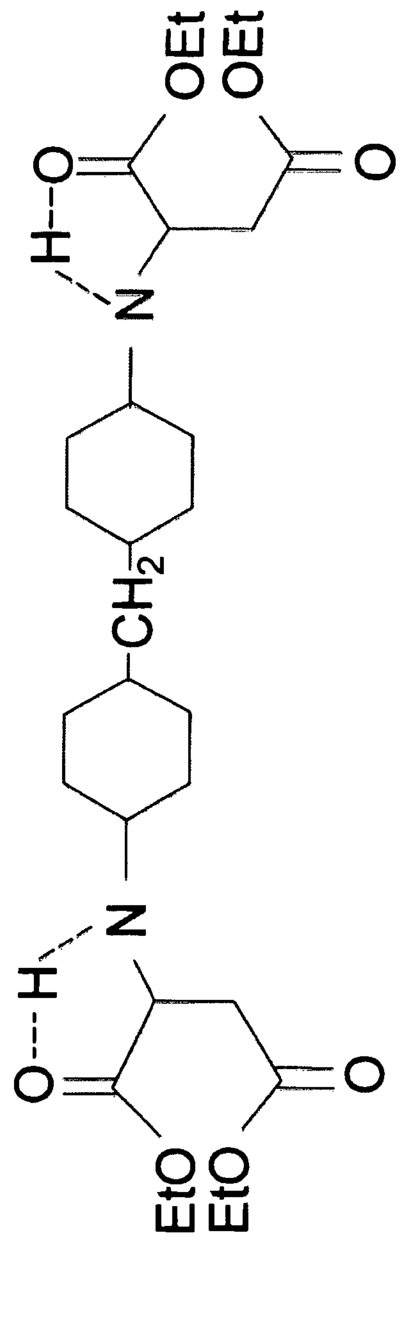

Fig. 4

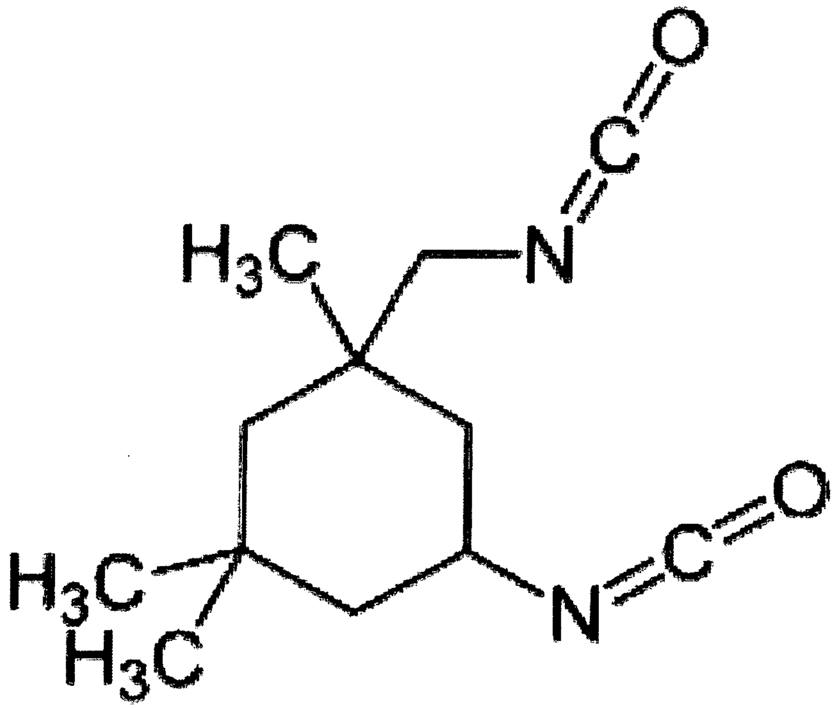

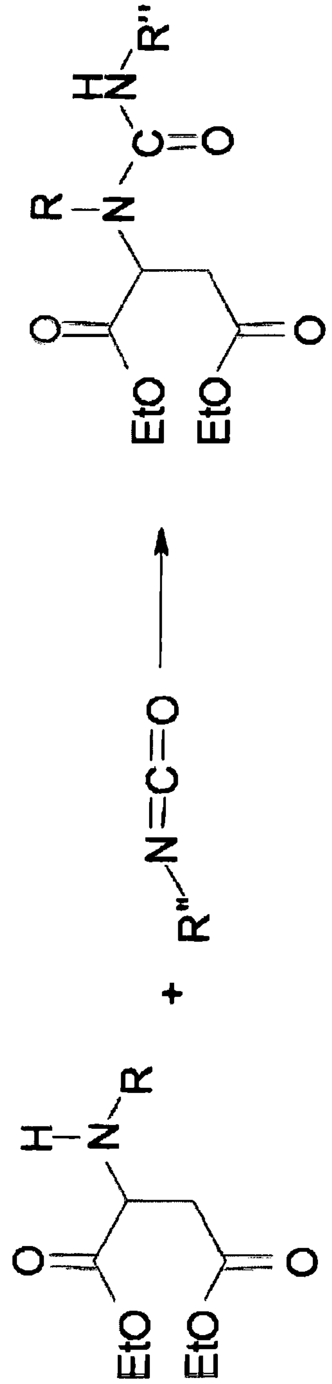

Fig. 5

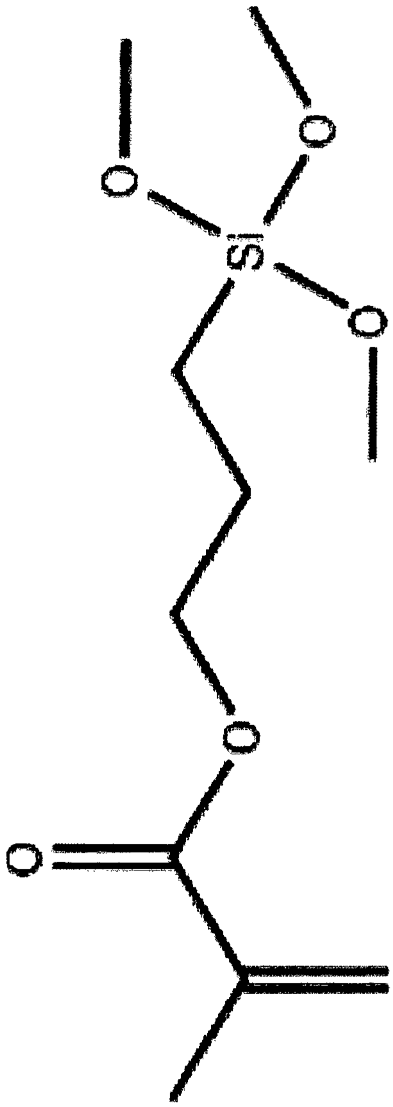

Fig. 6

# Fig. 7

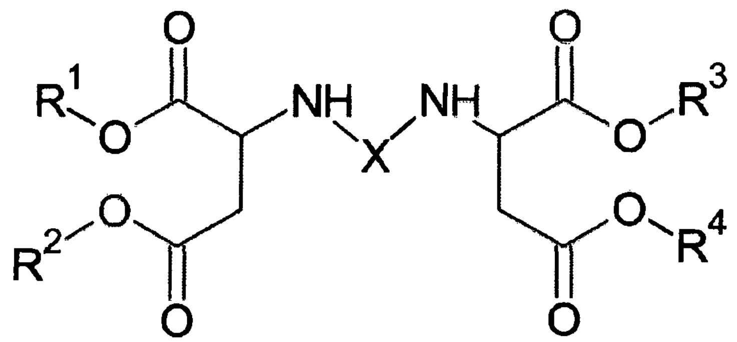

Mit $R^{1,2,3,4} = CH_3\text{-}(CH_2)_y$, wobei y zwischen 0 und 4, vorzugsweise $R^1 = R^2 = R^3 = R^4$ mit $y = 1$, alternativ $R^1 \neq R^2 \neq R^3 \neq R^4$

# Fig. 8

| X | DESMOPHEN NH |
|---|---|
| 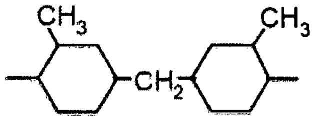 | NH 1520 |
| 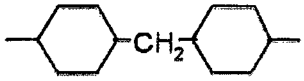 | NH 1420/1422 |
| 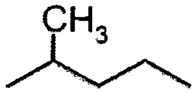 | NH 1220 |

Fig. 9

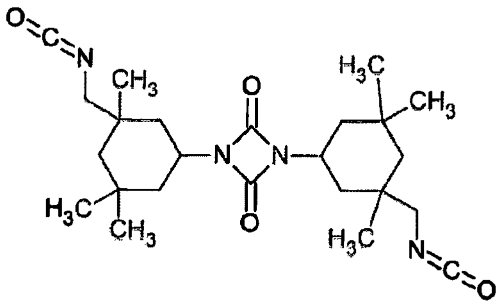

Fig. 10

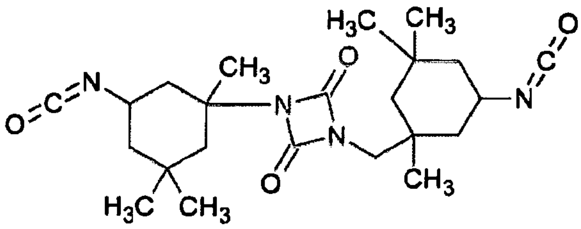

Fig. 11

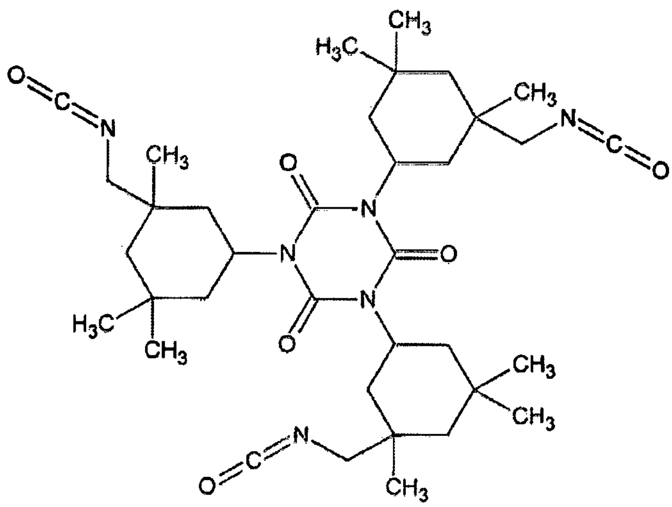

Fig. 12

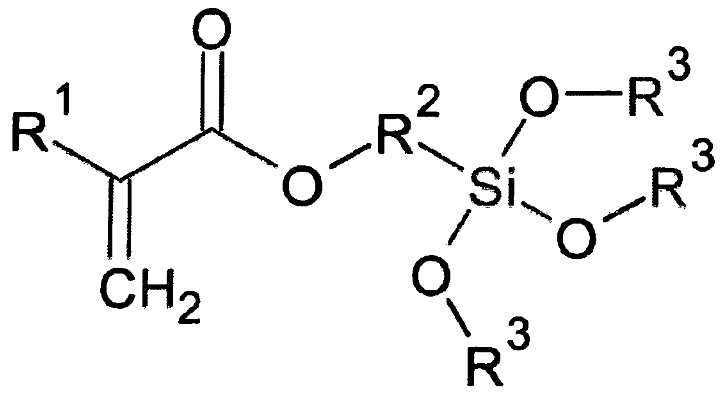

Mit $R^{1,3} = CH_3-(CH_2)_y$, bzw. $R^2 = (CH_2)_y$ wobei y zwischen 0 und 5 und $R^1$ = oder $\neq R^3$

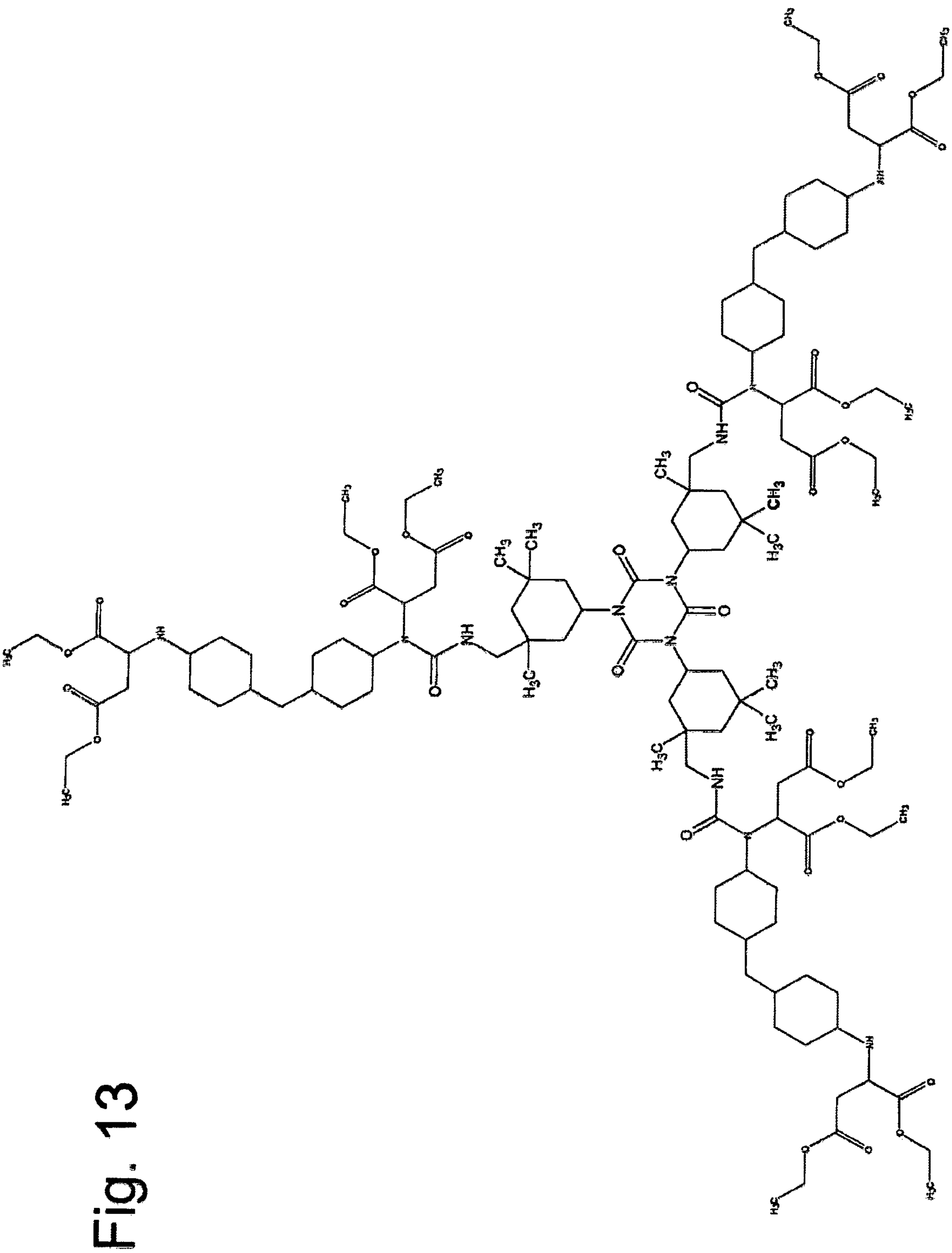

Fig. 13

Europäisches Patentamt
European Patent Office
Office européen des brevets

# EUROPÄISCHER RECHERCHENBERICHT

Nummer der Anmeldung
EP 24 00 0089

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X<br><br><br>A | US 2006/223954 A1 (BRINKHUIS RICHARD HENDRIKUS G [NL] ET AL) 5. Oktober 2006 (2006-10-05)<br>* Absätze [0001], [0006] - [0012], [0025], [0029], [0033] - [0043] *<br>* Absätze [0050] - [0052]; Beispiele 9-15; Tabelle II * | 1-10, 13-15<br><br><br>11,12 | INV.<br>C08G18/38<br>C08G18/73<br>C08G18/75<br>C08G18/79<br>C08G18/80<br>C09D175/02 |
| X | EP 3 868 805 A1 (COVESTRO DEUTSCHLAND AG [DE]) 25. August 2021 (2021-08-25)<br>* Absätze [0001] - [0005], [0010] - [0016], [0041] - [0049], [0062] - [0071] *<br>* Absätze [0072] - [0078], [0079] - [0087]; Beispiele 2,4; Tabellen 1,2 * | 1-15 | |
| | | | RECHERCHIERTE SACHGEBIETE (IPC) |
| | | | C08G<br>C09D |

Der vorliegende Recherchenbericht wurde für alle Patentansprüche erstellt

| Recherchenort | Abschlußdatum der Recherche | Prüfer |
|---|---|---|
| München | 30. Oktober 2024 | Neugebauer, Ute |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
& : Mitglied der gleichen Patentfamilie, übereinstimmendes Dokument

1

EPO FORM 1503 03.82 (P04C03)

## ANHANG ZUM EUROPÄISCHEN RECHERCHENBERICHT ÜBER DIE EUROPÄISCHE PATENTANMELDUNG NR.

EP 24 00 0089

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

30-10-2024

| Im Recherchenbericht angeführtes Patentdokument | Datum der Veröffentlichung | Mitglied(er) der Patentfamilie | Datum der Veröffentlichung |
|---|---|---|---|
| US 2006223954 A1 | 05-10-2006 | AT E547487 T1 | 15-03-2012 |
| | | BR PI0412320 A | 22-08-2006 |
| | | EP 1641888 A1 | 05-04-2006 |
| | | ES 2383634 T3 | 22-06-2012 |
| | | JP 2007528428 A | 11-10-2007 |
| | | PL 1641888 T3 | 31-08-2012 |
| | | SI 1641888 T1 | 29-06-2012 |
| | | US 2006223954 A1 | 05-10-2006 |
| | | WO 2005005558 A1 | 20-01-2005 |
| EP 3868805 A1 | 25-08-2021 | KEINE | |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- DE 102006002153 A1


### In der Beschreibung aufgeführte Nicht-Patentliteratur


- *CHEMICAL ABSTRACTS*, 2530-85-0